# EUROPÄISCHE PATENTSCHRIFT

(11) **EP 1 079 059 B1**
(45) Veröffentlichungstag und Bekanntmachung des Hinweises auf die Patenterteilung: **06.07.2005**
(21) Anmeldenummer: 00117570.2
(22) Anmeldetag: 16.08.2000
(51) Int. Cl.: F16C 33/46, F16C 33/50, F16M 11/08, F16M 11/18

(54) **Lagerelement**
Supporting element
Elément de support

(30) Priorität: 23.08.1999 DE 19939920
(43) Veröffentlichungstag der Anmeldung: 28.02.2001
(73) Patentinhaber: Grundig Multimedia B.V., 1083HJ Amsterdam (NL)
(72) Erfinder: Wagner, Peter, 90556 Cadolzburg (DE)
(74) Vertreter: Pröll, Jürgen

(56) Entgegenhaltungen:
- DE-A- 3 526 627
- DE-A- 3 635 261
- DE-U- 6 932 518
- FR-A- 1 576 666
- GB-A- 2 260 167
- US-A- 2 566 421
- US-A- 4 397 507
- US-A- 4 844 628
- US-A- 5 346 317
- US-A- 5 749 556
- PATENT ABSTRACTS OF JAPAN vol. 017, no. 362 (M-1441), 8. Juli 1993 (1993-07-08) & JP 05 052215 A (T H K KK), 2. März 1993 (1993-03-02)

## Beschreibung

Die Erfindung betnfft ein Lagerelement und ein Lager, insbesondere für ein Fernsehgerät.

Nach dem Stand der Technik ist von der Firma Grundig AG ein auf einer Grundplatte drehbar gelagerter Fernseher bekannt. Das Lager weist ein scheibenförmiges Lagerelement auf. In darin vorgesehenen Durchbrüchen sind Kugeln aufgenommen.

Bei dem bekannten Lagerelement handelt es sich um ein gerätespezifisches Spezialteil. Die Herstellung solcher Spezialteile ist teuer.

Das Aufnahmeelement ist als flexibles Band ausgebildet. Unter dem Begriff "Band" werden hier sowohl ein bandförmig als auch stangenartig ausgebildete Elemente verstanden.- Ein solches Lagerelement ist einfach und kostengünstig herstellbar. Es kann als Meterware bereitgehalten werden. Durch die flexible Ausbildung kann das Band an die jeweilige Lagerform angepaßt werden. Das Lagerelement ist also universell einsetzbar.

Aus DE-A-3 526 627, DE-U-6 932 518 und US-A-2 566 421 sind derartige Lagerelemente bekannt, bei denen ein Aufnahmeelement mit einer ersten Höhe Durchbrüche aufweist, in denen drehbar Rollelemente mit einem Durchmesser (D) aufgenommen sind, wobei der Durchmesser größer als die erste Höhe ist.

Aufgabe der vorliegenden Erfindung ist es, die Nachteile nach dem Stand der Technik zu beseitigen. Es soll insbesondere ein Lagerelement angegeben werden, das einfach und kostengünstig herstellbar und universell einsetzbar ist.

Diese Aufgabe wird durch die Merkmale des Anspruchs 1 gelöst.

Das Vorsehen der Verjüngungen ermöglicht es, das Band in zwei zueinander senkrecht stehenden Ebenen zu biegen und daraus erforderlichenfalls einen Ring herzustellen.

Nach einem Ausgestaltungsmerkmal sind die Rollelemente unverlierbar in den Durchbrüchen gehalten. Dazu können im Querschnitt der Durchbrüche vorspringende Nasen zum Halten der Rollelemente innerhalb der Durchbrüche vorgesehen sein. Die unverlierbare Ausführung erleichtert das Handling der Lagerelemente.

Nach einer weiteren Ausgestaltungsform sind die, vorzugsweise aus Metall hergestellten, Rollelemente in Form einer Kugel, eines Zylinders oder Kegels ausgebildet. Das Band kann im Bereich der Durchbrüche eine zweite Breite aufweisen, die größer als die erste Breite ist. Diese Ausgestaltungsform wird insbesondere dann zur Anwendung kommen, wenn als Rollelememte Zylinder bzw. Walzen oder Kegel gewählt werden.

Das Band kann aus Metall oder Kunststoff, vorzugsweise aus einem Polyethylen-Werkstoff, wie Polyacetal-Polyoxymethelen oder Polytetrafluorethylen, hergestellt sein. Die vorerwähnten Kunststoffe weisen besonders gute Gleiteigenschaften auf. Sie ermöglichen eine reibungsarme Führung der Rollelemente.

Die beiden Enden des Bandes können zum Verbinden derselben eine korrespondierende Form aufweisen, so daß das Band zu einem Ring schließbar ist. Die beiden Enden können insbesondere so ausgebildet sein, daß eine Steck-, Klemm- oder Rastverbindung herstellbar ist. Zur Herstellung einer Steckverbindung kann eine korrespondierend zum Querschnitt des Bandes ausgebildete Hülse vorgesehen sein. Die Enden können aber auch so ausgebildet sein, daß ein Verhaken derselben möglich ist.

Nach einer weiteren Ausgestaltung ist ein Lager, insbesondere für ein Fernsehgerät, vorgesehen, mit einem erfindungsgemäßen Lagerelement.

Dabei kann das Lagerelement in einer, vorzugsweise ringkanalartig ausgebildeten, Führung gefuhrt sein. Das erhöht die Funktionssicherheit. In diesem Fall müssen die beiden Enden nicht unbedingt fest miteinander verbunden sein.

Vorteilhafterweise umgeben zwei erste um die zweiten Verjüngungen zu einem Ring gebogene und durch einen Rohrabschnitt voneinander beabstandet gehaltene Lagerelemente eine von einer Grundplatte sich erstreckende Achse. Ein zweites um die ersten Verjüngungen zu einem Ring gebogenes Lagerelement kann in einer um die Achse umlaufenden Führung geführt sein. Ein Rohrstutzen liegt zweckmäßigerweise mit seiner Innenwand an den Rollelementen der ersten Lagerelemente an und ist axial auf die Rollelemente des zweiten Lagerelements abgestützt. An der gegenüberliegenden Seite kann er an einer Trägerplatte befestigt sein. Die Trägerplatte dient zur Befestigung bzw. zur Aufnahme des zu drehenden Gegenstands

Zur Herstellung einer einfach zu realisierenden Drehvorrichtung kann an der der Grundplatte zugewandten Unterseite der Trägerplatte ein einen Elektromotor und ein Getriebe aufweisender Antrieb zum Drehen der Trägerplatte aufgenommen sein. Die Drehbewegung des Motors wird zweckmäßigerweise mittels eines Keilriemens vom Getriebe auf die Achse übertragen. Dazu kann an der Achse eine Radialnut vorgesehen sein. Das vorgeschlagene Lager bzw. die Drehvorrichtung ist besonders kompakt und einfach aufgebaut. Durch das Vorsehen eines Keilriemens erfüllt diese Drehvorrichtung außerdem die Funktion einer Rutschkupplung.

Nachfolgend wird ein Ausführungsbeispiel der Erfindung an Hand der Zeichnung näher erläutert. Hierin zeigen:
- Fig.1: eine Draufsicht auf einen Abschnitt eines Lagerelements,
- Fig.2: eine Querschnittsansicht nach Fig. 1,
- Fig.3: Lagerelemente in Ringform in perspektivischer Ansicht, nicht gemäß der Erfindung,
- Fig.4: die Lagerelemente gemäß Fig.3 in Seitenansicht,
- Fig.5: eine Seitenansicht eines Lagers mit Antrieb,
- Fig.6: eine Draufsicht nach Fig. 5,
- Fig.7: eine Teilquerschnittsansicht gemäß der Schnittlinie B-B in Fig. 5,
- Fig.8: eine perspektivische Ansicht des Antriebs gemäß Fig. 5.

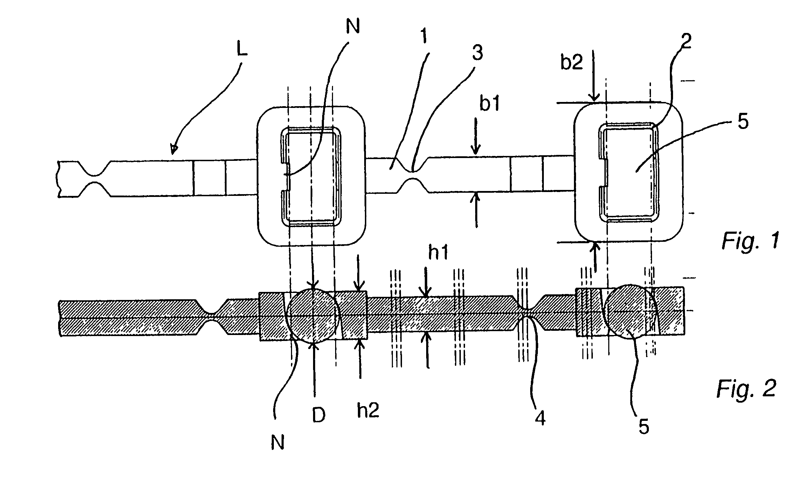

In den Fig.1 und 2 ist ein allgemein mit dem Bezugszeichen L bezeichnetes Lagerelement gezeigt. Ein aus einem flexiblem Kunststoff hergestelltes - hier abschnittsweise dargestelltes - Band 1 weist eine erste Breite b1 und im Bereich eines Durchbruchs 2 eine zweite Breite b2 auf. In der ersten Breite b1 sind erste Verjüngungen 3 vorgesehen. Das Band 1 weist ferner im Bereich zwischen den Durchbruchen 2 eine erste Höhe h1 auf. Im Bereich der Durchbrüche 2 ist die Höhe des Bands 1 mit einer Höhe h2 geringfügig größer ausgebildet. In der ersten Höhe h1 ist eine zweite Verjüngung 4 ausgebildet, die senkrecht zur ersten Verjüngung 3 steht.

In den Durchbrüchen 2 sind aus Metall hergestellte Zylinder 5 drehbar aufgenommen. Sie sind mittels Nasen N unverlierbar in den Durchbrüchen 2 gehalten. Ein Durchmesser D der Zylinder 5 ist größer als die erste h1 und zweite Höhe h2. Die Zylinder 5 stehen also beidseitig über das Band 1 hervor.

Die erste Höhe h1 kann - wie im hier gezeigten Ausführungsbeispiel - etwa genauso groß wie die erste Breite b1 sein.

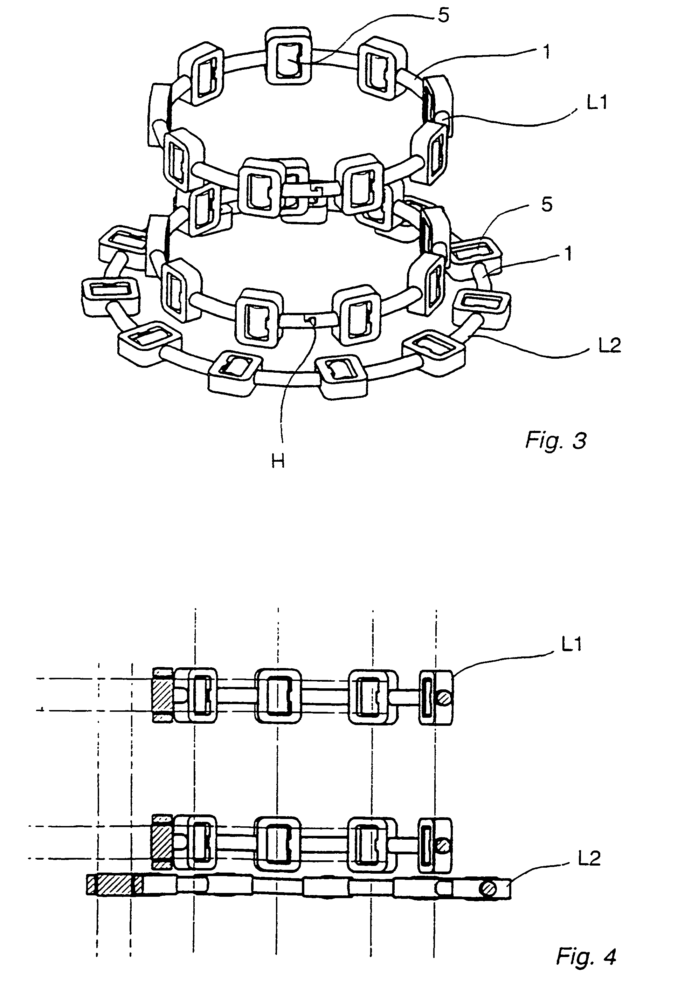

In den Fig.3 und 4 sind um die zweiten Verjüngungen 4 zu einem Ring gebogene erstes Lagerelemente L1 und ein um die ersten Verjüngungen 3 zu einem Ring gebogenes zweites Lagerelement L2 gezeigt. Die ersten Lagerelemente L1 wirken als Radiallager und die zweiten Lagerelemente L2 als Axiallager.

Das Band 1 ist hier - wie in der Fig.4 gezeigt - kettenartig ausgebildet. Die die Durchbrüche 2 umgebenden Abschnitte sind mit im Querschnitt rund ausgebildeten Zwischenabschnitten miteinander verbunden. Die erste Breite b1 und die erste Höhe h1 sind hier also gleich groß.

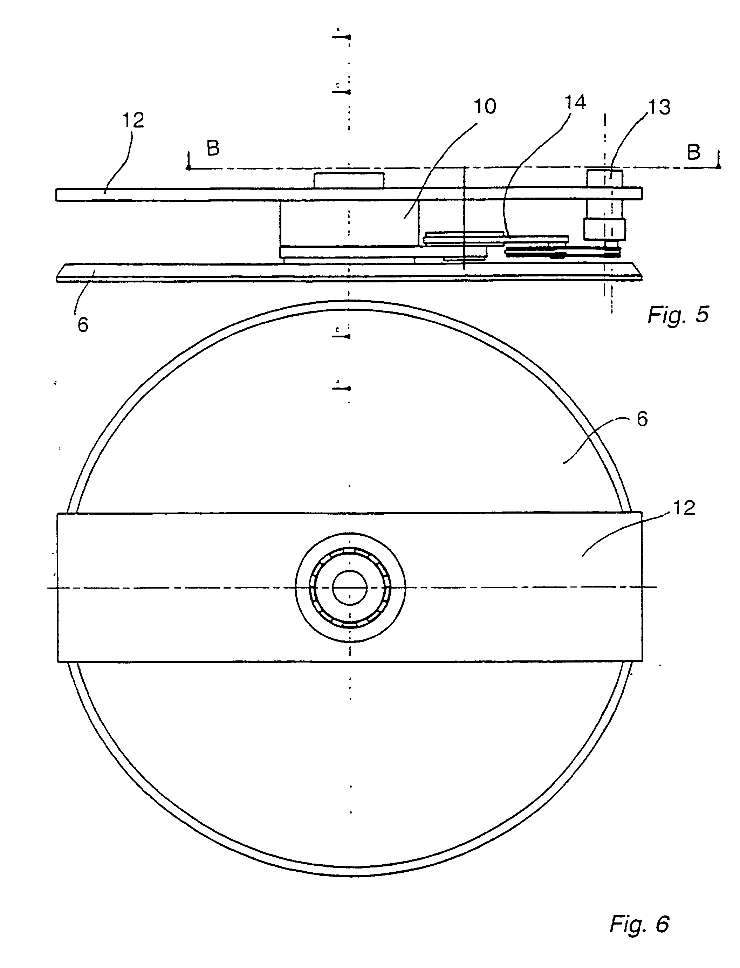

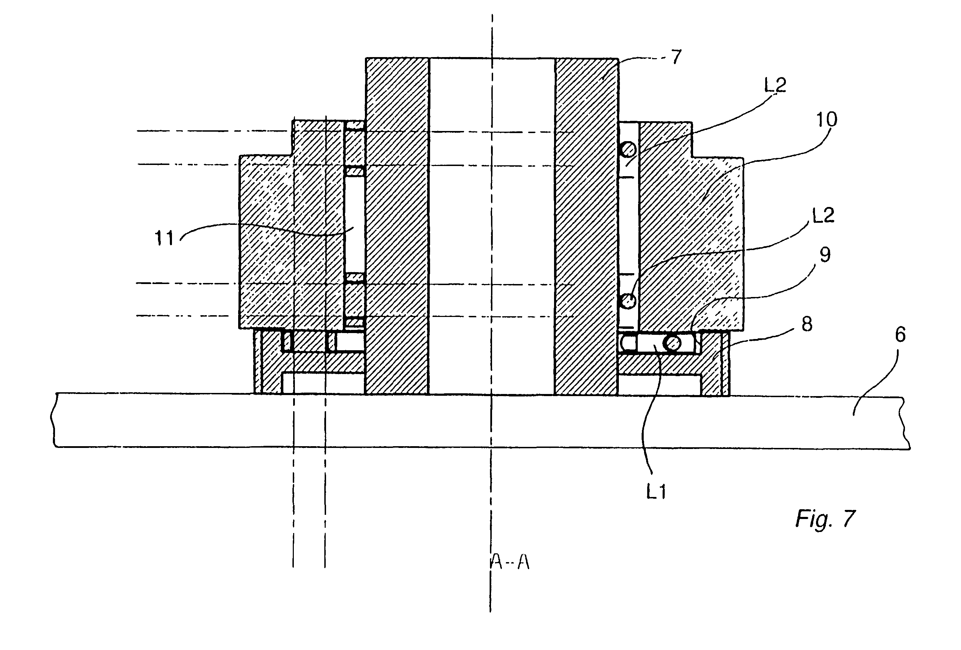

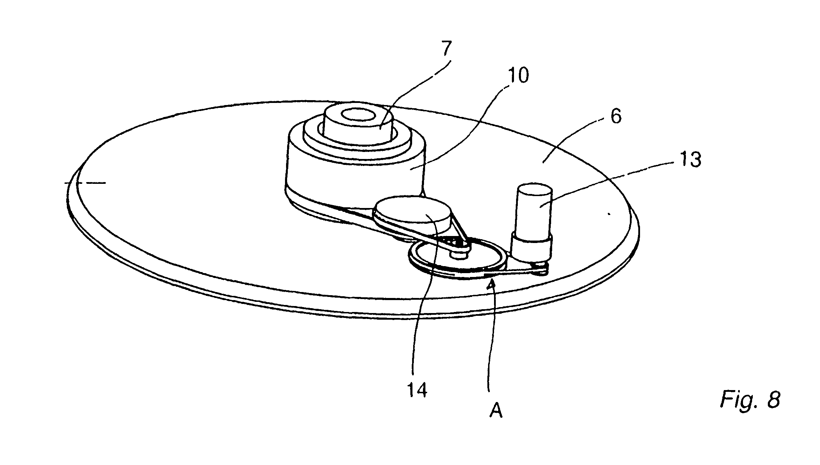

In den Fig.5 - 8 ist ein Lager für ein Fernsehgerät gezeigt. Wie am besten aus Fig.7 ersichtlich ist, ist auf einer Grundplatte 6 eine sich senkrecht davon erstreckende Achse 7 angebracht. Mit der Achse 7 verbunden ist eine Riemenscheibe 8. Innerhalb einer durch die Riemenscheibe 8 gebildeten Führung 9 ist ein zu einem Ring gebogenes erstes Lagerelement L1 aufgenommen. Das erste Lagerelement L1 dient hier als Axiallager. Es ist durch Biegen des Bands 1 um die ersten Verjüngungen 3 gebildet.

Zwischen der der Achse 7 zugewandten Innenwand eines Rohrstutzens 10 und der Achse 7 befinden sich zwei zweite Lagerelemente L2. Sie werden durch einen Rohrabschnitt 11 voneinander axial beabstandet gehalten. Die zweiten Lagerelemente L2 sind durch Biegung des Bands 1 um die zweiten Verjüngungen 4 hergestellt. Auf dem Rohrstutzen 10 ist eine Trägerplatte 12 befestigt.

Die Trägerplatte 12 nimmt einen Antrieb A zum Drehen der Trägerplatte 12 gegenüber der Grundplatte 6 auf. Der Antrieb A umfaßt einen Elektromotor 13 und ein Getriebe 14. Der Antrieb A ist an der der Grundplatte 6 zugewandten Unterseite der Trägerplatte 12 angebracht. Diese Bauweise ist besonders kompakt. Eine Oberseite der Trägerplatte 12 bleibt zur Aufnahme eines Fernsehgeräts frei.

Zur Herstellung der Lagerelemente L1, L2 wird ein Abschnitt vorgegebener Länge von dem in Fig.1 und Fig.2 gezeigten Band 1 abgetrennt. Der Abschnitt wird je nach Verwendungszweck entweder um die ersten 3 oder um die zweiten Verjüngungen 4 zu einem Ring gebogen. Die Enden des Abschnitts werden miteinander verbunden. Dazu können mit einer geeigneten Stanzvorrichtung hakenartige Ausnehmungen an den Enden vorgesehen sein. Solche hakenartige Ausnehmungen sind in Fig.3 mit dem Bezugszeichen H angedeutet. Statt der mittels Haken erfolgenden Verbindung der beiden Enden sind auch andere Verbindungen, z.B. eine Steckverbindung oder eine Verbindung mittels eines Rohrs bzw. einer Hülse denkbar.

### Bezugszeichenliste

- 1: Band
- 2: Durchbruch
- 3: erste Verjüngung
- 4: zweite Verjüngung
- 5: Zylinder
- 6: Grundplatte
- 7: Achse
- 8: Riemenscheibe
- 9: Führung
- 10: Rohrstutzen
- 11: Rohrabschnitt
- 12: Trägerplatte
- 13: Elektromotor
- 14: Getriebe

- h1: erste Höhe
- h2: zweite Höhe
- b1: erste Breite
- b2: zweite Breite
- L1: erstes Lagerelement
- L2: zweites Lagerelement
- A: Antrieb
- N: Nase
- H: hakenartige Ausnehmung
- D: Durchmesser

## Patentansprüche

1. Lagerelement, bei dem ein Aufnahmeelement mit einer ersten Höhe (h1) Durchbrüche (2) aufweist, in denen drehbar Rollelemente (5) mit einem Durchmesser (D) aufgenommen sind, wobei der Durchmesser (D) größer als die erste Höhe (h1) und das Aufnahmeelement als flexibles Band (1) ausgebildet ist,
**dadurch gekennzeichnet,**
**dass** das Band (1) in einer ersten Breite (b1) erste Verjüngungen (3) und in der ersten Höhe (h1) zweite Verjüngungen (4) aufweist, wobei die ersten Verjüngungen (3) zu den zweiten Verjüngungen (4) in Längsrichtung des Bandes (1) versetzt sind und die ersten Verjüngungen (3) und die zweiten Verjüngungen (4) jeweils zwischen zwei Durchbrüchen (2) angeordnet sind.

2. Lagerelement nach Anspruch 1, wobei die Rollelemente (5) unverlierbar in den Durchbrüchen (2) gehalten sind.

3. Lagerelement nach einem der vorhergehenden Ansprüche, wobei die ersten (3) und/oder die zweiten Verjüngungen (4) jeweils zwischen zwei Durchbrüchen (2) angeordnet sind und/oder die, vorzugsweise aus Metall hergestellten Rollelemente (5) in Form einer Kugel, eines Zylinders oder Kegels ausgebildet sind und/oder das Band (1) im Bereich der Durchbrüche (2) eine zweite Breite (b2) aufweist, die größer als die erste Breite (b1) ist.

4. Lagerelement nach einem der vorhergehenden Ansprüche, wobei das Band (1) aus Metall oder Kunststoff, vorzugsweise einem Polyethylen-Werkstoff, wie Polyacetal-Polyoxymethelen oder Polytetrafluorethylen, hergestellt ist.

5. Lagerelement nach einem der vorhergehenden Ansprüche, wobei die beiden Enden des Bands (1) zum Verbinden derselben eine korrespondierende Form aufweisen, so daß das Band (1) zu einem Ring schließbar ist und/oder die beiden Enden so ausgebildet sind, daß eine Steck-, Klemm- oder Rastverbindung herstellbar ist.

6. Lager, insbesondere für ein Fernsehgerät, mit einem Lagerelement (L1, L2) nach einem der vorhergehenden Ansprüche.

7. Lager nach Anspruch 6, wobei das Lagerelement in einer, vorzugsweise ringkanalartig ausgebildeten, Führung (9) geführt ist und/oder zwei erste um die zweiten Verjüngungen (4) zu einem Ring gebogene und durch einen Rohrabschnitt (11) voreinander beabstandet gehaltene Lagerelemente (L1) eine von einer Grundplatte (6) sich erstreckende Achse (7) umgeben.

8. Lager nach einem der Ansprüche 6 bis 7, wobei ein zweites um die ersten Verjüngungen (3) zu einem Ring gebogenes Lagerelement (L2) in einer um die Achse (7) umlaufenden Führung (9) geführt ist und/oder der Rohrstutzen (10) mit seiner Innenwand an den Rollelementen (5) der ersten Lagerelemente (L1) anliegt und axial auf die Rollelemente (5) des zweiten Lagerelements (L2) abgestützt ist.

9. Lager nach einem der Ansprüche 6 bis 8, wobei der Rohrstutzen (10) an einer Trägerplatte (12) befestigt ist und/oder an der der Grundplatte (6) zugewandten Unterseite der Trägerplatte (12) ein einen Elektromotor (13) und ein Getriebe (14) aufweisender Antrieb (A) zum Drehen der Trägerplatte (12) aufgenommen ist und/oder die Drehbewegung des Elektromotors (13) mittels eines Keilriemens vom Getriebe (14) auf die Achse (7) übertragen wird.

## Claims

1. Bearing element in which a receiving element having a first height (h1) has openings (2) which accommodate rotatable roller elements (5) having a diameter (D), wherein the diameter (D) is greater than the first height (h1) and the receiving element is formed as a flexible strip (1), **characterized in that** the strip (1) has first constrictions (3) in a first width (b1) and second constrictions (4) in the first height (h1), wherein the first constrictions (3) are offset in the longitudinal direction of the strip (1) with respect to the second constrictions (4) and the first constrictions (3) and the second constrictions (4) are disposed in each case between two openings (2).

2. Bearing element according to Claim 1, wherein the roller elements (5) are held captive in the openings (2).

3. Bearing element according to either of the preceding claims, wherein the first (3) and/or the second constrictions (4) are disposed in each case between two openings (2) and/or the roller elements (5), which are made, preferably, of metal and are formed as a sphere, a cylinder or a cone, and/or the strip (1) has, in the region of the openings (2) a second width (b2), that is greater than the first width (b1).

4. Bearing element according to any one of the preceding claims, wherein the strip (1) is made of metal or polymer, preferably a polyethylene material, such as polyacetal polyoxymethylene or polytetrafluoroethylene.

5. Bearing element according to any one of the preceding claims, wherein the two ends of the strip (1) have a matching shape for joining the same so that the strip (1) can be closed to form a ring and/or the two ends are formed in such a way that a plug, clamp or latch joint can be made.

6. Bearing, in particular for a television set, having a bearing element (L1, L2) according to any one of the preceding claims.

7. Bearing according to Claim 6, wherein the bearing element, preferably formed as an annular channel, is guided in a guide (9) and/or two first constrictions are bent around the second constrictions (4) to form a ring and bearing elements (L1) held apart from one another by a tubular section (11) surrounded a spindle (7) extending from a base plate (6).

8. Bearing according to either of Claims 6 or 7, wherein a second bearing element (L2) bent around the first constrictions (3) to form a ring is guided in a guide (9) surrounding the spindle (7) and/or the tubular pipe piece (10) rests by means of its inner wall against the roller elements (5) of the first bearing element (L1) and is supported axially on the roller elements (5) of the second bearing element (L2).

9. Bearing according to any one of Claims 6 to 8, wherein the tubular pipe piece (10) is attached to a carrier plate (12) and/or a drive (A) comprising an electric motor (13) and a gear system (14) for rotating the carrier plate (12) is accommodated at that underside of the base plate (12) that faces the base plate (6) and/or the rotational movement of the electric motor (13) is transmitted by means of a V-belt from the gear system (14) to the spindle (7).

## Revendications

1. Élément de support dans lequel un élément de réception présentant une première hauteur (h1) est muni de traversées (2) dans lesquelles sont reçus en rotation des éléments roulants (5) présentant un diamètre (D), le diamètre (D) étant supérieur à la première hauteur (h1) et l'élément de réception étant réalisé sous forme de bande flexible (1), **caractérisé en ce que** la bande (1) présente dans une première largeur (b1) de premiers rétrécissements (3) et dans la première hauteur (h1) de seconds rétrécissements (4), les premiers rétrécissements (3) étant décalés par rapport aux seconds rétrécissements (4) en direction longitudinale de la bande (1), et les premiers rétrécissements (3) et les seconds rétrécissements (4) étant agencés chacun entre deux traversées (2).

2. Élément de support selon la revendication 1, dans lequel les éléments roulants (5) sont retenus de façon imperdable dans les traversées (2).

3. Élément de support selon l'une des revendications précédentes, dans lequel les premiers (3) et/ou les seconds rétrécissements (4) sont agencés chacun entre deux traversées (2) et/ou les éléments roulants (5) fabriqués de préférence en métal sont réalisés sous forme de bille, de cylindre ou de cône et/ou la bande (1) présente dans la zone des traversées (2) une seconde largeur (b2) qui est supérieure à la première largeur (b1).

4. Élément de support selon l'une des revendications précédentes, dans lequel la bande (1) est réalisée en métal ou en matière plastique, de préférence en un matériau de polyéthylène, tel que polyacétalpolyoxyméthylène ou polytétrafluoroéthylène.

5. Élément de support selon l'une des revendications précédentes, dans lequel les deux extrémités de la bande (1) présentent une forme correspondante afin de les relier, de sorte que la bande (1) est susceptible de se fermer en une bague et/ou les deux extrémités sont réalisées de manière à permettre une liaison à enfichage, à coincement ou à enclenchement.

6. Support, en particulier pour un appareil téléviseur, comportant un élément de support (L1, L2) selon l'une des revendications précédentes,

7. Support selon la revendication 6, dans lequel l'élément de support est guidé dans un guidage (9) réalisé de préférence en forme de canal annulaire, et/ou deux premiers éléments de support (L1) recourbés autour des seconds rétrécissements (4) pour former une bague et maintenus écartés l'un de l'autre par un tronçon tubulaire (11) entourent un axe (7) qui s'étend à partir d'une plaque de base (6).

8. Support selon l'une des revendications 6 et 7, dans lequel un second élément de support (L2) recourbé autour des premiers rétrécissements (3) pour former une bague est guidé dams un guidage (9) s'étendant autour de l'axe (7), et/ou le manchon tubulaire (10) prend appui par sa paroi intérieure contre les éléments roulants (5) des premiers éléments de support (L1) et est appuyé axialement sur les éléments roulants (5) du second élément de support (L2).

9. Support selon l'une des revendications 6 à 8, dans lequel le manchon tubulaire (10) est fixé sur une plaque porteuse (12) et/ou un entraînement (A) destiné à faire tourner la plaque porteuse (12) et comprenant un moteur électrique (13) et un mécanisme de transmission (14) est reçu sur le côté inférieur de la plaque porteuse (12) tourné vers la plaque de base (6), et/ou le mouvement de rotation du moteur électrique (13) est transmis au moyen d'une courroie trapézoïdale depuis le mécanisme de transmission (14) à l'axe (7).
